# EUROPEAN PATENT SPECIFICATION

(11) **EP 3 138 629 B1**
(45) Date of publication and mention of the grant of the patent: **20.03.2019**
(21) Application number: 15785805.1
(22) Date of filing: 21.04.2015
(51) Int. Cl.: B01J 19/30, C02F 11/02, C02F 3/10

(54) **BIOMASS CARRIER ELEMENT FOR BIOLOGICAL TREATMENT SYSTEMS**
BIOMASSETRÄGERELEMENT FÜR BIOLOGISCHE BEHANDLUNGSSYSTEME
ÉLÉMENT SUPPORT DE BIOMASSE POUR DES SYSTÈMES DE TRAITEMENT BIOLOGIQUE

(30) Priority: 29.04.2014 ES 201430571
(43) Date of publication of application: 08.03.2017
(73) Proprietor: Biologia Y Filtración, S.L., 08187 Santa Eulalia de Ronçana (Barcelona) (ES)
(72) Inventor: GARCIA COLOMA, Josep Mª, E-08187 Santa Eulalia de Ronçana (Barcelona) (ES)
(74) Representative: Urizar Anasagasti, Jesus Maria
(86) International application number: PCT/ES2015/070321
(87) International publication number: WO 2015/166125

(56) References cited:
- EP-A1- 2 119 499
- WO-A2-85/05287
- DE-U1- 20 202 371
- ES-U- 1 064 520
- GB-A- 1 439 745
- IFAT ENTSORGA 2012., [Online] 13 July 2013, XP008185412 Retrieved from the Internet: <URL:HTTPS://WEB.ARCHIVE.ORG/WEB/2013071322 5318> [retrieved on 2015-07-10]

## Description

### Object of the invention

The object of this invention is a carrier element for biomass generated in biological treatment processes of municipal and industrial wastewater, sludge treatment and gas cleaning, by means of aerobic or anaerobic systems called moving bed and fixed bed systems or upflow anaerobic systems.

### Background of the invention

The wastewater and sludge treatment system by means of a moving bed system has been known for some years; however, the same is not true for the gas and air treatment system in general. This system consists of a specifically shaped plastic element that has cavities, inside of which bacteria colonies form, and these colonies degrade the organic matter contained in the wastewater.

There are different models of plastic pieces on the market that are found in various shapes, sizes and materials and used successfully; it is worth noting the existence of utility model ES 1064520 U of the same holder as the present invention, which refers to a "fill element for biological wastewater treatment facilities, by means of fixed biomass processes, exchange towers and gas cleaning".

These plastic fill elements, commonly called "carriers", must have some specific features such as rough, curved surfaces to facilitate the attachment of bacteria colonies to them; wide, open spaces that allow fluids to easily flow through them; and a small size with external contours that facilitate their movement through the fluid in the case of moving bed and upflow systems.

Therefore, the technical problem that is posed is the development of fill elements which provide improved features in order to increase their effectiveness and use in treatment systems.

### Description of the invention

The biomass carrier element for biological treatment systems, especially applicable for the treatment of wastewater, sludge and gases by means of a fixed biomass process, has features that are improved and aimed at increasing its specific surface area with respect to the existing background.

Another objective of the invention is to define the non-stick means in that carrier element which prevent, or significantly reduce, the possibility that carrier elements stick together, forming groups that impede the circulation of fluids through its interior.

According to the invention, the carrier element comprises: - a frustoconical tubular body provided with an opening of a smaller diameter and an opening of a greater diameter; - S-shaped radial walls defined inside the tubular body and converging at a central shaft; curved internal blades extending radially from the internal wall of the tubular body or from the central shaft and disposed, in a cantilevered manner, between the radial walls, leaving a free space to improve the circulation of fluids; and - a plurality of external blades that are the same height as the tubular body, which are perpendicular to the wall of said tubular body, and which are evenly distributed around same.

The purpose of these external blades is to facilitate the rotating movement of the carrier element during its use.

The ends of the S-shaped radial walls extend out from diametrically opposite points of the tubular body, converging at the central shaft.

The larger opening of the tubular body has a flat perimeter ring on its exterior that is perpendicular to the geometric axis of said tubular body. This perimeter ring has a small height and projects from the tubular body at a distance that is equal to the length of the exterior blades, helping prevent the carrying elements from sticking together.

The internal blades are taller the closer they are to the central area of the tubular body, exceeding the height of the tubular body and protruding from the opposite openings of that tubular body; such that they make up non-stick means of the carrier elements by preventing them from entering and sticking to each other.

The arrangement of the walls and the internal blades provide a greater surface area for the placement of the biomass, and by reducing the interior spaces, it channels the fluid currents in such a way that they do not drag the biomass colonies outwards.

The external blades are arranged longitudinally throughout the tubular body and become thicker the closer they get to the perimeter ring that is located at the opening of a greater diameter of the tubular body.

The aforementioned carrier element is made up of a heat-injected plastic material, which has walls with microcavities produced by microerosion to that carrier element's manufacturing matrix; and the purpose of those microcavities is to improve the attachment of the biomass colonies to the carrier element.

### Description of the figures

As a complement to the description provided herein, and for the purpose of helping to make the characteristics of the invention more readily understandable, the present specification is accompanied by a set of drawings constituting an integral part of the same, which, by way of illustration and not limitation, represent the following:

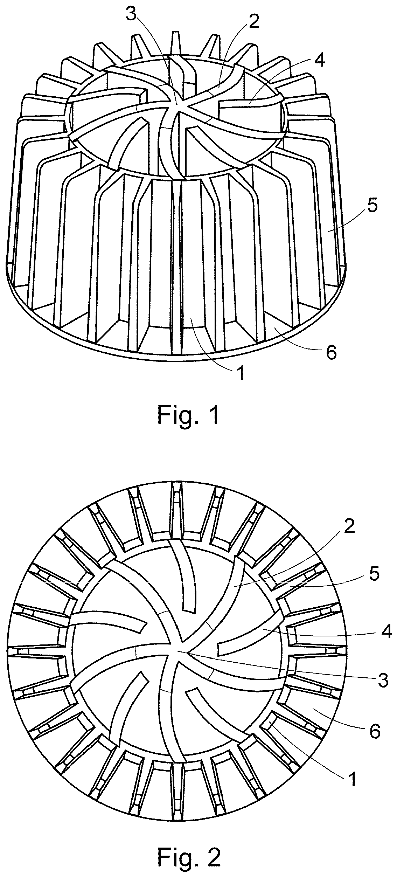

- Figure 1 shows an upper perspective view of the biomass carrier element for biological treatment systems, according to the invention.
- Figure 2 shows a front view of the biomass carrier element of the preceding figure.

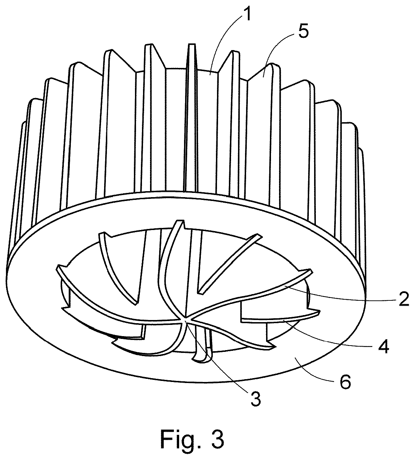

- Figure 3 shows a lower perspective view of the biomass carrier element of the preceding figures.

### PREFERRED EMBODIMENT OF THE INVENTION

As can be observed in the attached figures, the carrier element object of the invention comprises a frustoconical tubular body (1) provided with an upper opening of a smaller diameter and a lower opening of a greater diameter; and S-shaped radial walls (2) disposed inside the tubular body that converge at a central shaft (3).

Inside the aforementioned tubular body (1) there are also curved internal blades (4) which in the example shown extend radially from the internal wall of the tubular body (1) and are disposed, in a cantilevered manner, between the radial walls, without reaching the central shaft (3).

The carrier element comprises a plurality of external blades (5) which are the same height as the tubular body, are perpendicular to the wall of said tubular body, and are evenly distributed around the same.

In the exemplary embodiment shown in the figures, the larger opening of the tubular body has a flat perimeter ring (6) on its exterior that is perpendicular to the geometric axis of said tubular body (1).

The radial walls (2) and the internal blades (4) are taller the closer they are to the central area of the tubular body (1), exceeding the height of the tubular body and protruding from the opposite openings of the same.

In this invention, the carrier element is made up of a heat-injected plastic material. Said plastic material can be made of, for example, either new or restored polypropylene or polyethylene. There is also the possibility that it may include an inert material that increases its weight and can be used in salt water and therefore, in fish farms in order to eliminate nitrates. In the first case, the filling element has a density of approximately 0.98 g/cm³, and in the second case, it has a density of approximately 1.02 g/cm³.

In the example shown of the carrier element, the frustoconical tubular body (1) has a small opening with a diameter of 20 mm, a large opening with a diameter of 22 mm, and a height of 20 mm; and the height of the carrier element is 25 mm at its center point. The external blades (5) are 5 mm long and their height is the same as that of the tubular body (1). These external blades will facilitate the rotating movement of the carrier element. The carrier element can have a configuration similar to the one described previously, but with a size reduction of up to 40% of the same.

Having sufficiently described the nature of the invention, in addition to an example of preferred embodiment, it is hereby stated for the relevant purposes that the materials, shape, size and layout of the described elements may be modified, provided that it does not imply altering the essential characteristics of the invention claimed below.

## Claims

1. A biomass carrier element for biological treatment systems using the fixed biomass process, that comprises:
- a frustoconical tubular body (1) provided with an opening of a smaller diameter and an opening of a greater diameter;
- curves S-shaped radial walls (2) defined inside the tubular body (1) and converging at a central shaft (3); curved internal blades (4) extending radially from the internal wall of the tubular body (1) or from the central shaft (3) and disposed, in a cantilevered manner, between the radial walls (2); and
- a plurality of external blades (5) that are the same height as the tubular body (1), which are perpendicular to the wall of said tubular body (1), and which are evenly distributed around same;
in which:
in that the larger opening of the tubular body (1) has a flat perimeter ring (6) on its exterior that is perpendicular to the geometric axis of that tubular body (1); and projects from the tubular body at a distance that is equal to the length of the exterior blades;
in that the internal blades (4) are taller the closer they are to the central area of the tubular body (1), exceeding the height of the tubular body (1) and protruding from the opposite openings of said tubular body (1), such that they make up non-stick means of the carrier elements.

2. The carrier element, according to claim 1, **characterized in that** the external blades (5) are arranged longitudinally throughout the tubular body (1) and become thicker the closer they get to the perimeter ring (6) that is located at the opening of a greater diameter of the tubular body (1).

3. The carrier element, according to claim 1, **characterized in that** it is made of a injected plastic material.

## Patentansprüche

1. Biomasseträgerelement für biologische Behandlungssysteme unter Verwendung des Verfahrens für feste Biomasse, das Folgendes umfasst:
- einen kegelstumpfförmigen, rohrförmigen Körper (1), der mit einer Öffnung mit einem kleineren Durchmesser und einer Öffnung mit einem größeren Durchmesser bereitgestellt ist;
- gekrümmte s-förmige radiale Wände (2), die innerhalb des rohrförmigen Körpers (1) definiert sind und an einer zentralen Welle (3) zusammenlaufen; gekrümmte innere Rippen (4), die sich radial von der Innenwand des rohrförmigen Körpers (1) oder von der zentralen Welle (3) erstrecken und in einer vorspringenden Weise zwischen den radialen Wänden (2) angeordnet sind; und
- mehrere äußere Rippen (5), welche die gleiche Höhe wie der röhrenförmige Körper (1) haben, die senkrecht zur Wand des röhrenförmigen Körpers (1) sind und die gleichmäßig um denselben verteilt sind;
wobei:
die größere Öffnung des rohrförmigen Körpers (1) an seiner Außenseite einen flachen Umfangsring (6) aufweist, der senkrecht zur geometrischen Achse dieses rohrförmigen Körpers (1) ist; und von dem rohrförmigen Körper in einem Abstand hervorsteht, der gleich der Länge der äußeren Rippen ist;
die inneren Rippen (4) umso höher sind, je näher sie sich am mittleren Bereich des rohrförmigen Körpers (1) befinden, wobei sie die Höhe des rohrförmigen Körpers (1) überschreiten und aus den gegenüberliegenden Öffnungen des rohrförmigen Körpers (1) herausragen, sodass sie Antihaftmittel der Trägerelemente bilden.

2. Trägerelement nach Anspruch 1, **dadurch gekennzeichnet, dass** die äußeren Rippen (5) in Längsrichtung durch den röhrenförmigen Körper (1) angeordnet sind und dicker werden, je näher sie an den Umfangsring (6) kommen, der an der Öffnung eines größeren Durchmessers des röhrenförmigen Körpers (1) angeordnet ist.

3. Trägerelement nach Anspruch 1, **dadurch gekennzeichnet, dass** er aus einem spritzgegossenen Kunststoffmaterial hergestellt ist.

## Revendications

1. Élément de support de biomasse pour les systèmes de traitement biologique utilisant le procédé de biomasse fixe, qui comprend :
- un corps tubulaire tronconique (1) pourvu d'une ouverture d'un plus petit diamètre et d'une ouverture d'un plus grand diamètre ;
- des parois radiales à courbes en forme de S (2) définies à l'intérieur du corps tubulaire (1) et convergeant à un arbre central (3) ; des pales internes courbées (4) s'étendant radialement de la paroi interne du corps tubulaire (1) ou de l'arbre central (3) et disposées, en porte-à-faux, entre les parois radiales (2) ; et
- une pluralité de pales externes (5) qui sont de la même hauteur que le corps tubulaire (1), qui sont perpendiculaires à la paroi dudit corps tubulaire (1), et qui sont uniformément répartis autour de ce dernier ;
dans lequel :
en ce que la plus grande ouverture du corps tubulaire (1) a un anneau périphérique plat (6) à son extérieur qui est perpendiculaire à l'axe géométrique de ce corps tubulaire (1) ; et fait saillie du corps tubulaire à une distance qui est égale à la longueur des pales extérieures ;
en ce que les pales internes (4) sont plus grandes à mesure qu'elles se rapprochent de la zone centrale du corps tubulaire (1), dépassant la hauteur du corps tubulaire (1) et faisant saillie des ouvertures opposées dudit corps tubulaire (1), de sorte à constituer des moyens antiadhésifs des éléments de support.

2. Élément de support, selon la revendication 1, **caractérisé en ce que** les pales externes (5) sont disposées longitudinalement à travers le corps tubulaire (1) et s'épaississent à mesure qu'elles se rapprochent de l'anneau périphérique (6) qui est situé à l'ouverture d'un plus grand diamètre du corps tubulaire (1).

3. Élément de support, selon la revendication 1, **caractérisé en ce qu'**il est constitué d'une matière plastique injectée.
